# EUROPEAN PATENT APPLICATION

(11) **EP 4 296 556 A1**
(43) Date of publication of application: **27.12.2023**
(21) Application number: 23180675.3
(22) Date of filing: 21.06.2023
(51) Int. Cl.: F16L 55/46, F16L 55/38, B08B 9/053, B08B 9/043, F16L 55/48, F16L 101/12

(54) **ASEPTIC SCRAPING/PIGGING SYSTEM**

(30) Priority: 23.06.2022 US 202263354864 P
(71) Applicant: SPX Flow Technology Danmark A/S Udviklingsafdeling, 2860 Søborg (DK)
(72) Inventor: FERRE, Sebastien, 27180 Le Plessis-Grohan (FR); RIZAND, Guillaume, 69120 Vaulx-en-Velin (FR); COELHO, Gil, 27110 Epreville-près-le-Neubourg (FR)
(74) Representative: Atout PI Laplace

(57) **Abstract**

The disclosure is directed an aseptic scraping system, which provides for the highest level of hygiene in food and beverage, dairy, cosmetic, healthcare as well as pharmaceutical industries. The aseptic scraping/pigging system comprises: a launching station (100, 400) configured to accept a scraper (120); a catching station (300, 500) configured to accept the scraper (120, 412); a pipe (130, 360) connected to the launching station (100, 400) on one end and the catching station (300, 500) on the other end so that the launching station (100, 400) and catching station (300, 500) are in-line and in fluid communication; a launching station actuator (110) in the launching station (100, 400) for launching the scraper (120, 412) into the pipe (130, 360); a holding actuator (140) in the launching station (100, 400) for maintaining the scraper (120, 412) in the launching station (100, 400); and a catching station actuator (310) in the catching station (300, 500) for launching the scraper (120, 412) into the pipe (130, 360). The system is designed so that the pipe can be scraped while maintaining aseptic conditions.

The disclosure also includes a method of scraping a pipe using this system.

## Description

### TECHNICAL FIELD

This disclosure generally relates to an aseptic scraping/pigging system dedicated for the highest level of hygiene in the food and beverage, dairy, cosmetic, healthcare, and pharmaceutic industries.

### BACKGROUND

Large scale production of foods, beverages, dairy products, cosmetics, and pharmaceuticals requires sterile and hygienic conditions that need to be maintained during production. At the same time, during production the piping connecting the relevant machinery or the piping in the machinery often contains remaining product or residue materials.

Accordingly, there exists a need for an aseptic scraping/pigging system, which is cleanable and sterilizable in place and which can be used to separate two fluids without having to sterilize the whole system again or to recover some product from a pipeline.

### SUMMARY

These needs are met, to a great extent, by the aseptic scraping system disclosed herein. Implementations may include one or more of the following features.

One aspect of the disclosure is directed to an aseptic scraping/pigging system comprising: a launching station configured to accept a scraper; a catching station configured to accept the scraper; a pipe connected to the launching station on one end and the catching station on the other end so that the launching station and catching station are in-line and in fluid communication; a launching station actuator in the launching station for launching the scraper into the pipe; a holding actuator in the launching station for maintaining the scraper in the launching station; and a catching station actuator in the catching station for launching the scraper into the pipe. The system is designed so that the pipe can be scraped while maintaining aseptic conditions.

The disclosure also includes methods of scraping a pipe using these systems. Accordingly, one embodiment of the disclosure is a method of aseptically scraping a pipe maintained under aseptic conditions comprising: launching a scraper from a launching station attached at one end of the pipe maintained under aseptic conditions by engaging a sterilized launching station actuator to move the scraper into the pipe; maintaining a positive pressure ahead of the scraper's direction of motion to thereby scrape the pipe; and allowing the scraper to move to a catching station attached to another end of the pipe in fluid communication with the launching station. The method can also include returning the scraper from the catching station back to the launching station and optionally repeat the steps again.

Various additional features and advantages of this invention will become apparent to those of ordinary skill in the art upon review of the following detailed description of the illustrative embodiments taken in conjunction with the accompanying drawings.

### BRIEF DESCRIPTION OF THE DRAWINGS

The following detailed description is better understood when read in conjunction with the appended drawings. For the purposes of illustration, examples are shown in the drawings; however, the subject matter is not limited to the specific elements and instrumentalities disclosed. In the drawings:
FIG. 1 shows a cross-sectional view of an embodiment of a launching station of the disclosure.
FIG. 2 shows a cross-sectional view of an embodiment of a catching station of the disclosure.
FIG. 3 shows an embodiment of a scraper for use with the launching station and a catching station of the disclosure
FIGs. 4A-4D show another embodiment of a launching station of the disclosure.
FIG. 5A-5B show another embodiment of a catching station of the disclosure. FIG. 5A shows a cross-sectional view of an embodiment of the catching station of the disclosure. FIG. 5B shows a top perspective view of an embodiment of the disclosure.
FIGs 6A-6B show an embodiment of a pressure control assembly of the disclosure. FIG. 6A shows a top perspective view of an embodiment of the pressure control assembly. FIG. 6B shows a side view of the pressure control assembly.

### DETAILED DESCRIPTION

This disclosure provides an aseptic scraping system that is able to maintain a scraper in a pipe in a launching station under aseptic conditions. The scraper is introduced into a pipeline by a linear displacement.

As used herein, the term "scraping" is synonymous with "pigging" as used in the art. Scraping and pigging relate to using a projectile called "pig" or scraper to separate two fluids in a pipe (*e.g.* pipeline), one fluid pushing the pig, and that pig pushing the second fluid, which is usually the valuable product to recover.

To keep the scraper in position and move it, actuators are used. The rods are sterilized, for example, with steam.

The system comprises a launching station, a catching station, and a pipe in fluid communication with launching station and the catching station. For example, in one embodiment, the launching station is connected at one end and the catching station connected at the other end. The launching station and the catching station can be integral with the pipe.

In certain embodiments, all the parts of the actuators are in contact with the product, and have been previously in contact with steam, aseptic condensates, sterile water, or sterile air. More than one of those fluids can be used in the system, depending on the process phase.

Launching and catching stations are made following the same principle. The only difference is the stopping actuator on the launching station, is not used on the catching station. All the equipment can be sterilized in place. That is, the entire system can be sterilized. Further, as a part of the sterilization process the entire system has no retention, which can avoid retention of condensation during the steam sterilization process.

One embodiment of the disclosure is an aseptic scraping system comprising: a launching station configured to accept a scraper, a catching station configured to accept the scraper, a pipe connected to the launching station on one end and the catching station on the other end so that the launching station and catching station are in-line and in fluid communication; a launching station actuator in the launching station for launching the scraper into the pipe; a holding actuator in the launching station for maintaining the scraper in the launching station; and a catching station actuator in the catching station for launching the scraper into the pipe. The system is maintained under aseptic conditions prior to cleaning. In certain embodiments, the cleaning utilizing the system is not in carried out under sterile condition. The system is a sterilized after cleaning. After this sterilization, the system stays or can stay sterile through even multiple uses of pig in one direction or the other, until the end of production and the next cleaning. This is achieved by pressurizing the system upstream and downstream of the pig.

In some embodiments, the launching station actuator, the actuator, and the catching station actuator comprise a rod which is maintained under sterile conditions. In particular, the sterile conditions of the actuator can be achieved by including a steam chamber downstream from the side of the actuator that enters the pipe. Accordingly, in one embodiment, the launching station actuator, the actuator, and the catching station actuator and/or includes a steam chamber and the rod extends from the steam chamber into the pipe.

In the system, the launching actuator can be used to move the scraper through the piper. In addition, the scraper is moved through the pipe by maintaining a pressure differential between the side of the scraper that is facing the launching station on the side of the scraper that is facing the pipe, *i.e.* upstream and downstream from the pipe.

While the holding actuator may have various arrangements, in certain embodiments, the holding actuator in the launching station for maintaining the scraper in the launching station is approximately perpendicular to the launching station.

In some embodiment, in order to maintain the pressure differential, the system includes a valve towards the end of the pipe containing the holding station. This valve is preferably a one-way valve to permit venting to the atmosphere while maintaining aseptic conditions.

The inside parts of the system in contact with product are always kept under pressure once sterilization has been performed to avoid any external contamination. To allow motion of the pig (scraper): a pressure medium pushes on one side of the pig, on the other side in the in the 3rd assembly (*e.g*. a pressure control assembly), a control valve is opened to atmosphere and at the same time is controlling and ensuring a positive pressure inside the system just upfront the valve. This allows the pig to move while the system is maintained pressurized. This control of the pressure can be completed by a non-return valve (*e.g*. a one-way valve) ensuring external pressure will never create flow toward the pipe (*e.g.* process line).

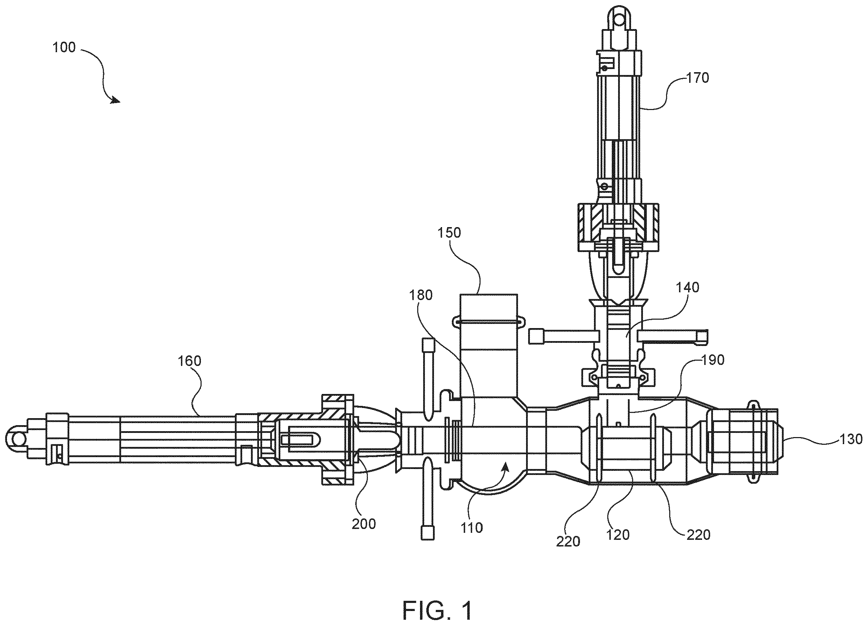

FIG. 1 shows an embodiment of a launching station 100 according to the disclosure. Launching station 100 contains a launching station actuator 110 which is configured for launching scraper 120 into pipe 130 (shown schematically) for scraping the interior of the pipe 130. The launching station 100 is in fluid communication with the pipe 130.

The launching station actuator 110 is arranged so that scraper 120 moves downstream the pipe 130. In certain embodiments, the launching station actuator 110 is approximately centered in the launching station 100 and is configured to move the scraper down to the pipe.

The launching station also includes a mechanism to hold the scraper 120 in place prior to use. This way the scraper can be kept *in situ* in the piping during normal operation without interrupting the normal operation of the piping. In one embodiment, the launching station contains a holding actuator 140 in the launching station 100 for maintaining the scraper 120 in the launching station 100. The holding actuator 140 is in an extended position when the scraper 120 is held in place in the launching station 100.

The holding actuator 140 is located approximately perpendicular to the launching station actuator 110. Alternate ways to hold the scraper 120 in place may also be employed. For example, in some embodiments the scraper contains a metal and is held in place by a magnet.

As the aseptic scraping system relies on pressure to move the scraper 120 out of the launching station, the launching station can also include a fluid intake 150 on the side of the scraper 120 that is upstream of the pipe 130, *i.e.* between the launching station actuator 110 and the holding actuator 140. The fluid intake collects fluid from part of the pipes scraped using the system. In certain embodiments, the fluid intake contains a valve to prevent fluid from the piping to flow through the launching station actuator.

The launching station actuator 110 is configured so that the aseptic sterile environment in the piping is maintained. For example, in one embodiment, the launching station actuator 110 comprises a steam chamber 160 and a rod 180. The rod 180 extends from the steam chamber 160 into the launching station actuator 110. The steam chamber 160 is located on the side of the actuator that is not in contact with the pipe 130. The steam chamber 160 is prevented from being in fluid communication with the launching station actuator 110 and the pipe 130 by seal 200. Through the use of the steam chamber 160, the rod 180 is kept sterile. When the system is operated, the steam in steam chamber 160 sterilizes the rod 180 so that when the rod 180 extends, the pipe 130 is not contaminated and the aseptic conditions are maintained. While sterilization using steam is preferred, the steam chamber 160 can contain a fluid or gas for sterilization.

Similarly, to maintain the aseptic conditions of the environment, the holding actuator 140 comprises a steam chamber 170 and a rod 190. The rod 190 extends from the steam chamber 170 into the launching station 100. The steam chamber 170 is located on the side of the holding actuator 140 that is not in contact with the pipe 130. Seal 200 prevents the steam chamber 170 from being in fluid communication with the launching station actuator 110 and the pipe 130. Use of the steam chamber 170 keeps the rod 190 sterile. When the system is operated, the steam in steam chamber 170 sterilizes the rod 190 so that when the rod 190 extends, the pipe 130 is not contaminated and the aseptic conditions are maintained. While sterilization using steam is preferred, the steam chamber 170 can contain a fluid or gas for sterilization.

The holding actuator 140 and the launching station actuator 110 can be pneumatic actuators. The holding station can also include a scraper detection sensor, a manual shut-off valve with lockable handle on the inlet, a temperature transmitter on the steam, a team trap, and/or a solenoid valve on the inlet.

When the system is used to scrape the pipe, the holding actuator 140 is retracted so that the scraper 120 can moved into the pipe 130 for scraping the pipe. In certain embodiments, retraction includes retraction of the rod 190. Once the holding actuator is retracted, the launching station actuator 110 extends to push the scraper 120 into pipe. In one embodiment, the launching station actuator 110 extends by moving rod 180 towards the pipe.

In some embodiments, use of the system also includes opening up a valve attached to fluid intake 150 to ensure there is a pressure differential between the side of the scraper 120 that faces the launching station 100 and the side of the scraper that faces the pipe 130. The launching station actuator 110 can extend into the pipe to assist the with the scraping.

The direction of fluid movement in FIG. 1 is through fluid intake 150 through the launching station 100 into the pipe 130.

The pipe 130 to which the launching station 100 is connected can in certain embodiments be valved off for cleaning-in-place, while the remainder of the piping remains in operation.

The scraping of the system is generated by the scraper, such as *e.g.* scraper 120, moving through the pipe to be cleaned and/or scraped. At the other end of the pipe 130 after cleaning, there is a catching station which is configured to hold the scraper in position and out of the pipe once cleaning is completed. The catching station is also designed to send the scraper back to the launching station.

The catching station is configured to accept the scraper after aseptic scraping or pigging. The catching station is located downstream of the launching station on the other end of the pipe (such that fluid moves through launching station and the pipe and into the catching station). Accordingly, in some embodiments, the system and methods of the disclosure can be used to push a fluid from the catching station to the launching station.

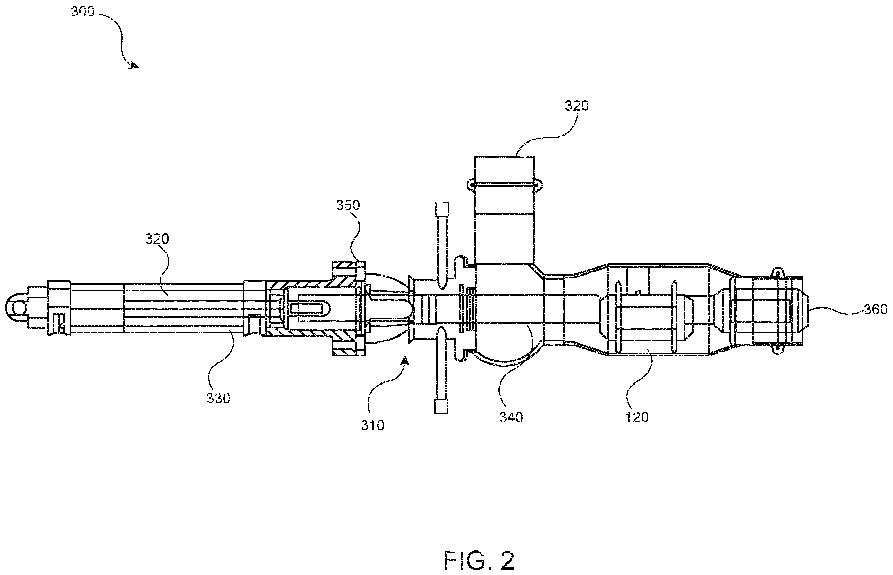

FIG. 2 shows an embodiment of a catching station of the disclosure. Specifically, FIG. 2 shows catching station 300 which is connected to and in fluid communication with pipe and launching station. In one embodiment, catching station 300 is connected to and in fluid connection with pipe 130 and launching station 100 as described above.

The direction of fluid movement in FIG. 2 is from the pipe into the catching station 300 (*i.e.* from right to left as shown in FIG. 2) and through fluid outlet 320, although direction of fluid movement can be reverse to guide the scraper 120 back to the launching station 100.

Catching station 300 includes a catching station actuator 310 and fluid outlet 320. The catching station actuator 310 can retract or extend into the pipe 360 (shown schematically) to allow the scraper 120 to return to the launching station 100.

The catching station actuator 310 is configured so that the aseptic sterile environment in the piping is maintained. For example, in one embodiment, the catching station actuator 310 comprises a steam chamber 330 and a rod 340. The rod 340 extends from the steam chamber 330 into the catching station 300. The steam chamber 330 is located on the side of the catching station actuator 310 that is not in contact with the pipe 360. The steam chamber 330 is prevented from being in fluid communication with the catching station 300 and the pipe by seal 350. The steam chamber 330 can sterilize the rod 340. When the system is operated, the steam in steam chamber 330 sterilizes the rod 340 so that when the rod 340 extends to return the scraper 120 into the pipe 360, the pipe 360 is not contaminated and the aseptic conditions are maintained. While sterilization using steam is preferred, the steam chamber 330 can contain a fluid or gas for sterilization.

The catching station actuator 310 can be a pneumatic actuator. In certain embodiments, the catching station also includes one or more of: temperature sensor for measuring the temperature of the steam; a scraper detection sensor; a valve for auxiliary fluid passage; a steam trap; and combinations thereof.

The entire aseptic scraping system is pressurized to ensure that the inside of the piping is maintained under sterile conditions.

During operation, the scraper (*e.g.* scraper 120) is released from the launching station moves through pipe scraping the interior surface of the pipe. The scraper is propelled by the pressure differential between upstream (*i.e.* the side of the scraper facing the launching station) and downstream of the scraper (*i.e.* the side of the scraper facing the catching station). The scraper 120 moves into the catching station 300 where is maintained in place by the motion of the fluid/as moving through the pipe into holding station escaping through fluid outlet 320.

Various configurations of scrapers can be use in the system of disclosure. For example, scraper 120 can contain one or more scraping surfaces 220 that are used for scraping the insides of the pipe 130. Scraper 120 is elongated has a scraping surface 220. In some embodiments, the scraper 120 includes an axially symmetrical elongated body shaped to have at least two axially spaced scraping surfaces 220 (which seal the scraper against an interior surface of the pipe 130). The scraper 120 may have a means for locating the scraper incorporated into the body of the scraper 120. For example, the scraper 120 may contain a magnet. Alternatively, the scraper 120 contains a radiofrequency identification tag. In certain embodiments, the system can be cleaned in place when the scraper (pig) is in the catching station.

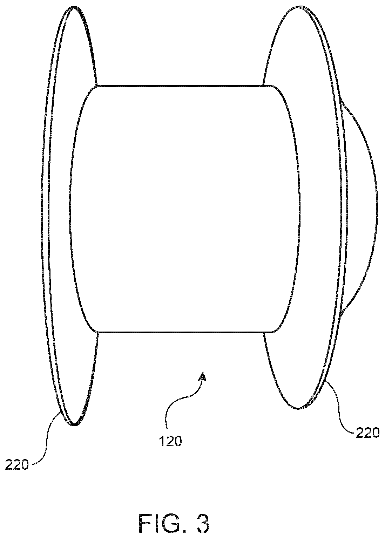

FIG. 3 shows an exemplary embodiment of the scraper 120. The scraper 120 can be constructed from an elastomer, such as *e.g*. silicone. As shown in FIG. 3. The scraper 120 is elongated and has scraping surfaces 220 towards a distal and a proximal end of the scraper. In certain embodiments, the body of the scarper 120 is has diameter that is as large or larger than rod 190 and rod 340.

Exemplary configurations for scrapers for use in the system and methods of the disclosure may be found in WO 2015/101676, the disclosure of which is incorporated herein in its entirety, particularly as it pertains to scrapers. The scraper may be constructed from a variety of materials, such as silicone or EPDM. The choice of the scraper must take into account the compatibility with the product and the cleaning solutions used. In certain embodiments, the scraper has a magnetic core so that it can be detected by the scraper detection sensors in the launching station and/or catching station.

The speed of the scraper should always be between 0.3 m/s and 1.5 m/s. The higher the speed, the faster the scraper will wear out. When pushing product with water, the speed of the scraper depends on the flow rate of the water being sent through the upstream process.

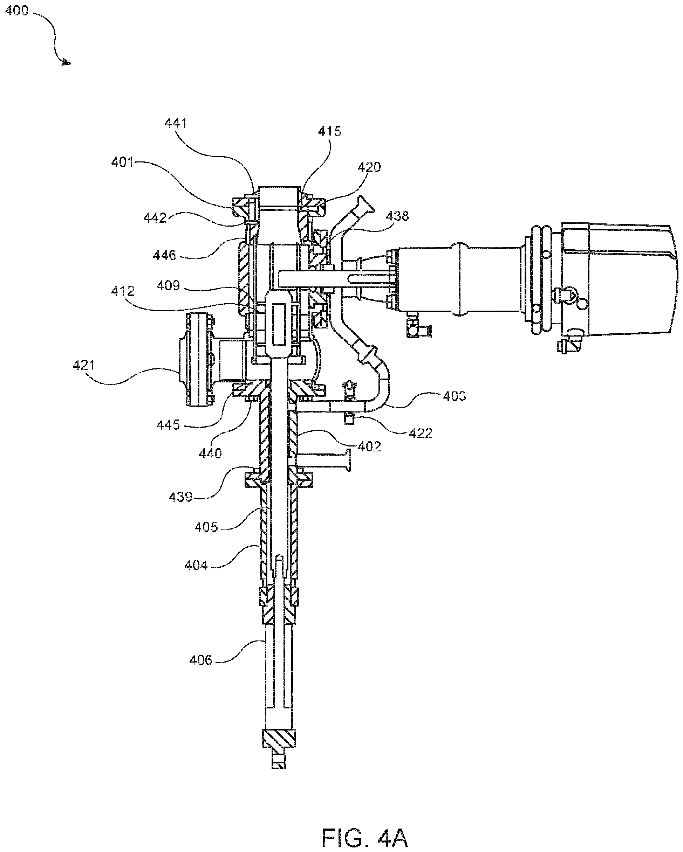

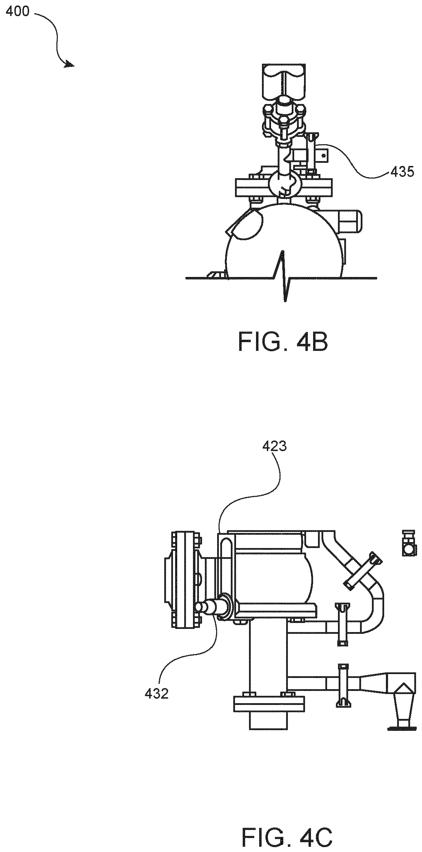

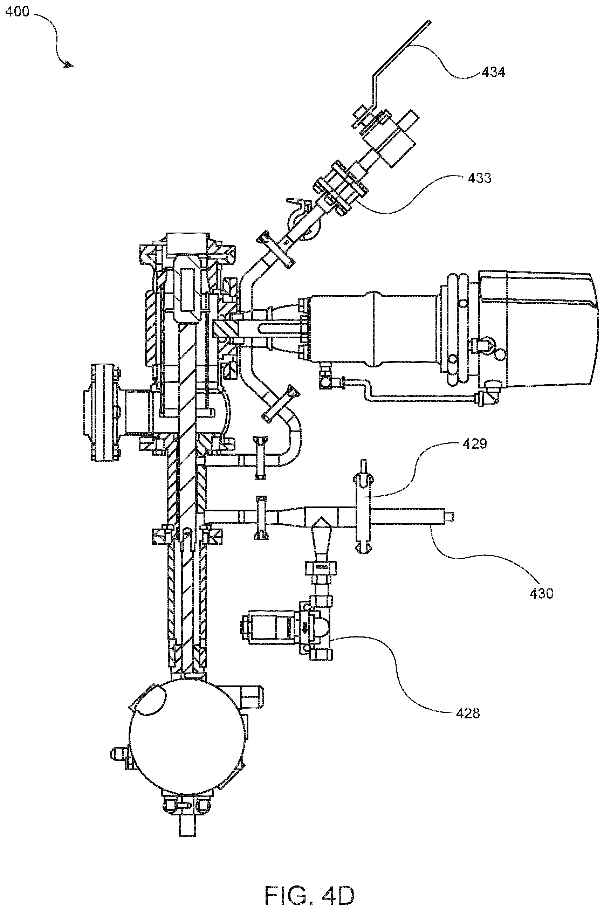

FIGs. 4A-4D show another embodiment of a launching station 400 of the disclosure. The launching station 400 can include any of the features described previously in reference to the launching station 100. FIG. 4A-4D show a launching station having a holding actuator perpendicular to a launching station actuator which is in-line with the pipes to be cleaned using the system. The launching station is configured to be in fluid communication with the piping and fluid from the piping is designed to flow through the launching station. The holding actuator and the launching actuator are electronically controlled. The launching station also contains a valve for the fluid (gas or liquid) to be used to push the scraper through the system. With reference to FIG. 4A-4D, in some embodiments, launching station 400 has launching station 401 has the following features:

| **Element** | **Description** |
|---|---|
| 401 | Launching station housing |
| 402 | Pusher steam chamber |
| 403 | Elbow assembly |
| 404 | Actuator adapter |
| 405 | Pusher shaft |
| 406 | Push actuator |
| 407 | Adapter |
| 408 | Sensor support |
| 409 | Pin assembly |
| 410 | Blocker steam chamber |
| 411 | Blocker shaft |
| 412 | Scraper |
| 413 | Actuator |
| 414 | Blocker housing seal |
| 415 | Flange seal |
| 416 | Shaft seal |
| 417 | Seat seal |
| 418 | Bushing |
| 419 | O ring |
| 420 | Cylinder pin |
| 421 | Flange |
| 422 | Mini clamp gasket |
| 423 | Side support plate |
| 424 | Centering washer |
| 425 | S-adapter |
| 426 | Guide rod |
| 427 | Housing |
| 428 | Solenoid valve |
| 429 | Clamp gasket |
| 430 | Temperature probe |
| 431 | Clamp ring |
| 432 | Magnetic sensor |
| 433 | Check valve |
| 434 | Valve |
| 435 | Mini clamp ring |
| 436 | Actuator sensor |
| 437 | Air hose |
| 438 | Screw |
| 439 | Screw |
| 440 | Screw |
| 441 | Screw |
| 442 | Nut |
| 443 | Screw |
| 444 | Nut |
| 445 | Pusher housing seal |
| 446 | Pin assembly housing seal |

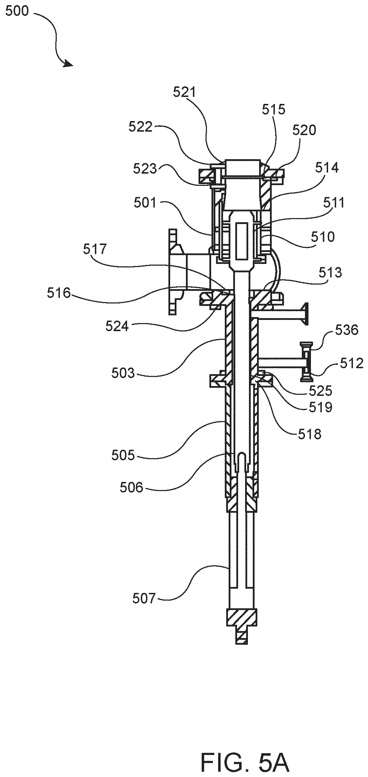

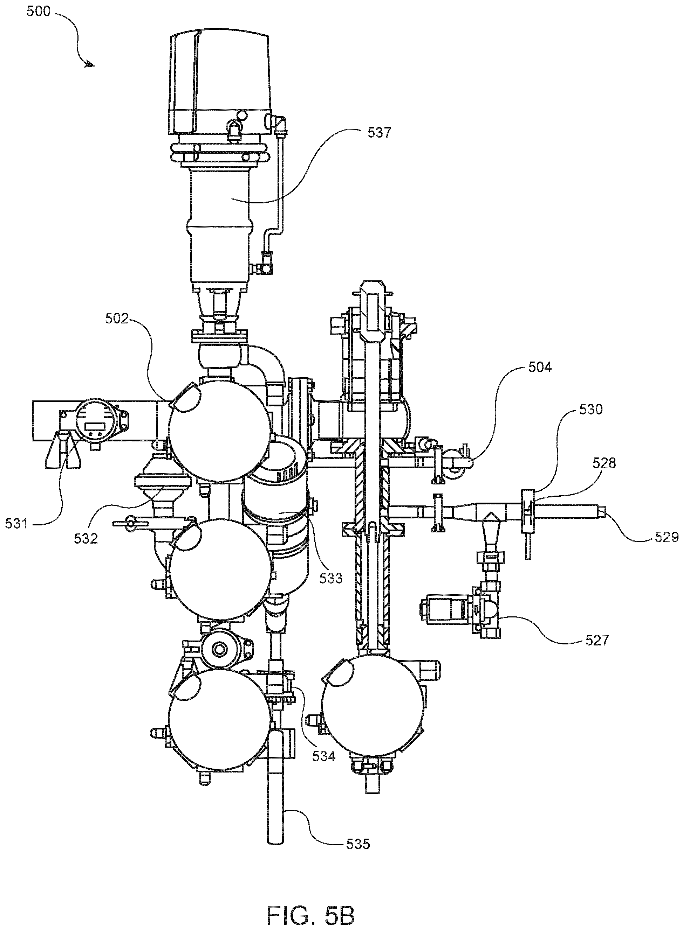

FIGs. 5A and 5B show another embodiment of a catching station 500 of the disclosure. Catching station (Receiving Station) 500, as shown in FIGs. 5A and 5B, has a similar arrangement to catching station 300 described above. The catching station 500 can include any of the features described previously in reference to the catching station 300. FIG. 5A shows a cross-sectional view of catching station 500. FIG 5B shows a top view of catching station 500. Specifically, catching station 500 is located downstream of the launching station (such as *e.g*. launching station 400) and connected to the piping to be scarped using the system of the disclosure. In addition to the catching station actuator shown in FIG. 5A, the catching station 400 contains several valves allowing for cleaning in place of the system of the disclosure. In addition, the valves allow for movement of fluid (liquid or gas) which moves the scraper through the piping. With reference to FIG. 5A and FIG. 5B, in certain embodiments, the catching station (or receiving station) 500 has the following features:

| **Element** | **Description** |
|---|---|
| 501 | Receiving station housing |
| 502 | Receiving station body |
| 503 | Pusher steam chamber |
| 504 | Elbow assembly |
| 5050 | Actuator adapter |
| 506 | Pusher shaft |
| 507 | Push actuator |
| 508 | Housing adaptor |
| 509 | Sensor support |
| 510 | Pin assembly |
| 511 | Scraper |
| 512 | Mini clamp gasket |
| 513 | Pusher housing seal |
| 514 | Pin assembly housing seal |
| 515 | Flange seal |
| 516 | Shaft seal |
| 517 | Seat seal |
| 518 | Bushing |
| 519 | O ring |
| 520 | Cylinder pin |
| 521 | Flange |
| 522 | Screw |
| 523 | Nut |
| 524 | Screw |
| 525 | Screw |
| 526 | Side support plate |
| 527 | Solenoid valve |
| 528 | Clamp gasket |
| 529 | Temperature probe |
| 530 | Clamp ring |
| 531 | Pressure probe + clamp adapter |
| 532 | Non-return valve |
| 533 | Valve |
| 534 | Check valve |
| 535 | BLV valve |
| 536 | Mini clamp ring |
| 537 | Valve |
| 538 | Magnetic sensor |
| 539 | Housing |
| 540 | Air hose |

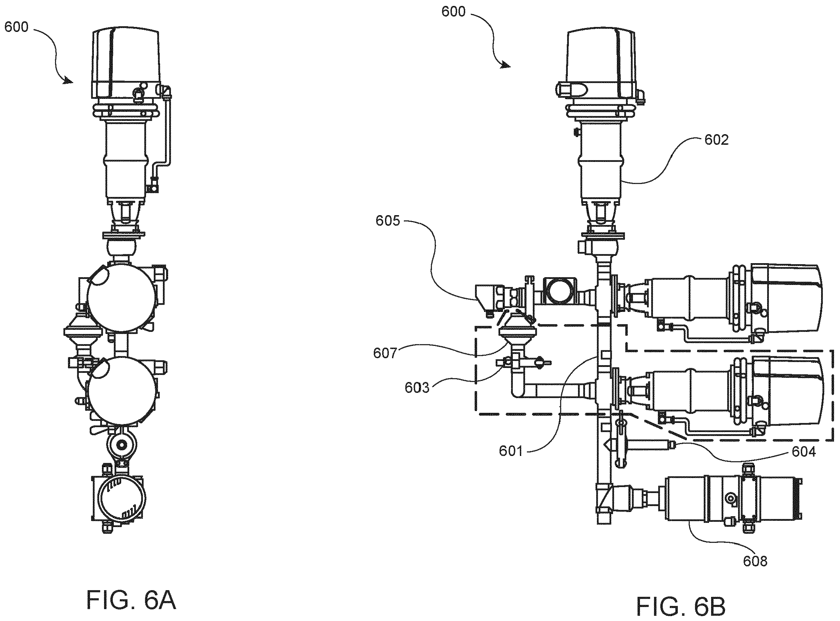

In certain embodiments of the systems of the disclosure, the pressure of the system is regulated to facilitate the scraping action of the scraper (and to allow movement of the scraper down the pipe. In one embodiment of the disclosure, the pressure of the system is controlled using a pressure control assembly having a drain valve and a pressure transmitter (such as *e.g.* a pressure gage). The drain valve can be electronically controlled. FIG. 6A and 6B show one embodiment of the pressure control assembly. Specifically, FIG. 6A shows a top perspective of pressure control assembly 600. FIG. 6B shows a side view of pressure control assembly 600. The pressure control assembly 600 has at least one drain valve and pressure transmitter. The assembly also has a drain point and a control valve. Using the pressure control assembly 600, it is possible to control the pressure of the system. With reference to FIG. 6A and FIG. 6B, in certain embodiments, the pressure control assembly 600 has the following features:

| **Element** | **Description** |
|---|---|
| 601 | Draining T housing |
| 602 | Valve |
| 603 | Clamp gasket |
| 604 | Temperature probe |
| 605 | Pressure probe + clamp adapter |
| 606 | Clamp ring |
| 607 | Non return valve |
| 608 | Modulating valve |

In one embodiment, the pressure control assembly is connected in the system towards the catching station. In another embodiment, the pressure control assembly is positioned downstream of the catching station and in in fluid connection with the catching station. For example, the pressure control assembly can be connected to the catching station via outlet in the catching station.

Once scraping is complete, the scraper is sent back to the launching station by reversing the fluid/gas flow through the system. The scraper is sent back by extending the actuator. In certain embodiments, after scraping the system can be cleaned-in-place.

The actuators in the system can be manually engaged. In other embodiments, the actuators in the system are automatically controlled.

In certain embodiments of the disclosure, the scraping system can be used to clean a process pipe containing a fluid product and the scraper is propelled using a different fluid. In this embodiment of the disclosure, the fluid flowing through the launching station (via *e.g.* the inlet in the launching station) propels the scraper through the pipe. As a result of the fluid, the scraper pushes the fluid product down the pipe.

During production, before use of the system, the product passes from the launching station through the process line to the catching station to the destination area of the product downstream from the catching station, such as *e.g.* a packaging machine. The holding actuator is extended, the launching actuator is retracted, thereby holding the scraper in place in the departure station. Throughout the production process, the drain lines and bodies of the actuators are subjected to a steam flush of the barriers.

In some embodiments, the system is engaged by transitioning from the production phase to the water push phase or the sterile air push phase.

In some embodiments, the transition from the production phase to the water push phase starts with stopping the product supply. The water from the upstream process pushes the product contained in the pipe to the launching station. The holding actuator is retracted, and subsequently the launching station actuator is activated, so that the scraper is engaged into the pipe. The water thus sent will pass through the departure station and put the scraper into movement. The advancement of the scraper is controlled by adjusting the water flow.

When the scraper reaches the detection sensor in the catching station, the push continues until the water reaches the downstream process, then the supply of water must be stopped. The water push can be followed by a return of the scraper by means of sterile air

In other embodiments, the transition from the production phase to the sterile air push phase starts with stopping the product supply. The steam barrier o\ is stopped, then the air inlet and blocking valves are opened to push the product contained in the pipe between the air injection point and the departure station.

The holding pneumatic actuator is retracted and the launching station actuator is activated, so that the scraper is engaged into the pipe. The air thus sent will pass through the departure station and actuate the scraper. The scraper advance is controlled by regulation of the airflow.

When the scraper reaches the detection sensor in the catching station, the push continues until the water reaches the downstream process, then the water supply must be stopped. The air push can be followed by the return of the scraper by means of sterile air.

To allow reaching the highest level of hygiene, the whole aseptic scraping system including the scraper is cleanable in place, sterilizable in place by, for example, overheated water or steam. When the system is cleaned in place, the scraper is in the catching station.

When the system is sterilized in place, the scraper in the launching station. Sterilization can be performed by means of overheated water (temperature higher than the boiling point of water at atmospheric pressure) or by means of steam, depending on the upstream/downstream equipment. Sterilization in place may also include returning the scraper to the launching station by for example, sterile air,

In certain embodiments, operation of the system also includes scraper inspection. After cleaning in place, the product line as well as the steam section are depressurized using the valves and pressure sensors in the catching station.

Innovations and aseptic design included in the system allow to scraper to be moving at various times from launching to receiving station and vice versa keeping the same sanitary state, without the need of sterilization after one travel of the scraper from one station to the other. Without being bound by theory, in certain embodiments this is achieved by the combination of at least the following technical features: PTFE membrane valves (valves without shaft seal), and steam chambers on the actuators pushing or blocking the pig. The steam chambers allow steam sterilization of by the part of shaft that will go inside the product pipe when the actuator is on, so actuator shaft is sterile when entering into product pipe.

The aseptic scraping systems of the disclosure can be used to minimize the losses of all kinds of products that can be moved in a pipe. For example, the scraping system can be used to minimize the loss of foods, beverages, chemicals, detergents etc.

The fluids used to send the scraper from the launching station or return the scraper to the catching station can be, for example, the same product as used in production, a different product, water, any gas (such as *e.g.* air, nitrogen, and CO₂).

The aseptic scraping systems of the disclosure also have a variety of different applications. Exemplary applications for these systems include but are not limited to:
- Food & Beverage such as *e.g.* milk, yoghourt, fresh cheese, cream, desserts, fruit, jam, caramel, fruit juices concentrated or not, syrups, all type of beverage - alcoholic or not, others;
- Cosmetic & pharmaceutical products; and
- Chemicals: detergents and all other chemical products.

The disclosure is also directed to methods of aseptically scraping a pipe maintained under aseptic conditions. The methods generally include operating the system described above by first launching the scraper from the launching station, scraping the pipe (product pipe) by moving the scraper through the pipe to the catching station, and then optionally returning the scraper to the launching station. These steps may be repeated numerous times, as necessary.

Accordingly, one embodiment of the disclosure is directed to methods of aseptically scraping a pipe maintained under aseptic conditions. The methods include launching a scraper from a launching station attached at one end of the pipe maintained under aseptic conditions by engaging a sterilized launching station actuator to move the scraper into the pipe; followed by maintaining a positive pressure ahead of the scraper's direction of motion to thereby scrape the pipe; and allowing the scraper to move to a catching station attached to another end of the pipe in fluid communication with the launching station. In certain embodiments, this is done by pressure control, such as via the use of a pressure transmitter and control valve.

In some embodiments, the step of launching the scraper further includes sterilizing the launching station actuator before engaging a launching station actuator. For example, the scraper may be sterilized by providing steam to a steam chamber attached to the actuator.

The methods also include flowing a fluid or gas through a fluid intake in the launching station. In some embodiments, the fluid intake is located adjacent to the launching actuator and is upstream of the scraper.

In some embodiments of the methods, the pipe is pressurized upstream and downstream of the scraper.

The step of launching the scraper can include disengaging an actuator holding the scraper in the launching station before engaging the launching station actuators.

In some embodiments, the step of maintaining a positive pressure ahead of the scraper's direction of motion to thereby scrape the pipe comprises opening a valve attached to the pipe to atmosphere and wherein the valve is positioned towards the end of pipe to which the catching station is attached. In some embodiments, pressure control (such as *e.g*. via a pressure transmitter and control valve) ensures positive pressure inside the system compared to the atmosphere. The steam barrier ensures sterilization of the pipe to atmosphere. This control of the pressure can be achieved by a non-return valve ensuring external pressure will never create flow toward the process line.

The methods also include returning the scraper to the launching station. In one embodiment, the methods include returning the scraper to the launching station by engaging a catching station actuator in the catching station.

The catching station used in the method can include a fluid outlet wherein the flow of the fluid through the outlet is reversible.

The methods can also include detecting a position of the scraper inside the pipe. The position can be detected, for example, utilizing a magnet in the scraper.

While the invention has been described and illustrated herein by references to various specific materials, procedures, and examples, it is understood that the invention is not restricted to the particular combinations of material and procedures selected for that purpose. Numerous variations of such details can be implied as will be appreciated by those skilled in the art. It is intended that the specification and examples be considered as exemplary, only, with the true scope of the invention being indicated by the following claims.

It will be appreciated that the foregoing description provides examples of the disclosure. However, it is contemplated that other implementations of the invention may differ in detail from the foregoing examples. All references to the invention or examples thereof are intended to reference the particular example being discussed at that point and are not intended to imply any limitation as to the scope of the invention more generally. All language of distinction and disparagement with respect to certain features is intended to indicate a lack of preference for those features, but not to exclude such from the scope of the invention entirely unless otherwise indicated. All methods described herein can be performed in any suitable order unless otherwise indicated herein or otherwise clearly contradicted by context.

### Numbered embodiments of the inventions

Examples of numbered embodiments of the invention are shown below.

Embodiment 1: An aseptic scraping/pigging system comprising: a launching station configured to accept a scraper; a catching station configured to accept the scraper; a pipe connected to the launching station on one end and the catching station on the other end so that the launching station and catching station are in-line and in fluid communication; a launching station actuator in the launching station for launching the scraper into the pipe; a holding actuator in the launching station for maintaining the scraper in the launching station; and a catching station actuator in the catching station for launching the scraper into the pipe, wherein the system is capable of being maintained under aseptic conditions.

Embodiment 5 The aseptic scraping system of embodiment 1, wherein the launching station actuator, the actuator, and the catching station actuator comprise a rod which is maintained under sterile conditions.

Embodiment 3. The aseptic scraping system of embodiment 1or 2, wherein the launching station actuator, the actuator, and the catching station actuator and/or further comprises a steam chamber and wherein the rod extends from the steam chamber into the pipe.

Embodiment 4. The aseptic scraping system of any one of embodiments 1 to 3, wherein the holding actuator in the launching station for maintaining the scraper in the launching station is approximately perpendicular to the launching station actuator.

Embodiment 5. The aseptic scraping system of any one of embodiment 4, wherein the launching station further comprises a fluid intake between the launching station actuator and the holding actuator.

Embodiment 6. The aseptic scraping system of any one of embodiments 1 to 6, further comprising a scraper.

Embodiment 7. The aseptic scraping system of embodiment 6, wherein the scraper comprises a means of position detection.

Embodiment 8. The aseptic scraping system of embodiment 7, wherein the means for position detection in the scraper is a magnet.

Embodiment 9. The aseptic scraping system of any one of embodiments 1 to 8, wherein the system is pressurized.

Embodiment 10. The aseptic scraping system of any one of embodiments 1 to 9, wherein the system further comprises a valve linked to the pipe positioned towards the end of the pipe comprising the catching station.

Embodiment 11. The aseptic scraping system of embodiment 10, wherein the system further comprises a pressure sensor operably linked to the valve.

Embodiment 15 The aseptic scraping system of any one of embodiments 1 to 10, wherein the catching station comprises a fluid outlet adjacent to the catching station actuator.

Embodiment 13. A method of aseptically scraping a pipe maintained under aseptic conditions comprising: launching a scraper from a launching station attached at one end of the pipe maintained under aseptic conditions by engaging a sterilized launching station actuator to move the scraper into the pipe; maintaining a positive pressure ahead of the scraper's direction of motion to thereby scrape the pipe; and allowing the scraper to move to a catching station attached to another end of the pipe in fluid communication with the launching station.

Embodiment 14. The method of embodiment 13, wherein the step of launching the scraper further comprises sterilizing the launching station actuator before engaging a launching station actuator.

Embodiment 15. The method of embodiments 13 or 14, wherein the sterilizing comprises providing steam to a steam chamber attached to the actuator.

Embodiment 16. The method of any one of embodiments 13-15, wherein the method comprises flowing a fluid or gas through a fluid intake in the launching station.

Embodiment 17. The method of embodiment 16, wherein the fluid intake is located adjacent to the launching actuator and is upstream of the scraper.

Embodiment 18. The method of any one of embodiments 13-17, wherein the pipe is pressurized upstream and downstream of the scraper.

Embodiment 19. The method of any one of embodiments 13-18, wherein the step of launching the scraper further comprises disengaging an actuator holding the scraper in the launching station before engaging the launching station actuators.

Embodiment 20. The method of any one of embodiments 13-19, wherein the step of maintaining a positive pressure ahead of the scraper's direction of motion to thereby scrape the pipe comprises opening a valve attached to the pipe to atmosphere and wherein the valve is positioned towards an end of pipe to which the catching station is attached.

Embodiment 21. The method of any one of embodiments 13-20, further comprising returning the scraper to the launching station by engaging a catching station actuator in the catching station.

Embodiment 25 The method of embodiment 21, wherein the catching station comprises fluid outlet and wherein the flow of the fluid through the outlet is reversible.

Embodiment 23. The method of any one of embodiments 13-22, further comprising detecting a position of the scraper inside the pipe.

Embodiment 24. The method of embodiment 23, wherein the scraper comprises a magnet.

## Claims

1. An aseptic scraping/pigging system comprising:
a launching station configured to accept a scraper;
a catching station configured to accept the scraper;
a pipe connected to the launching station on one end and the catching station on the other end so that the launching station and catching station are in-line and in fluid communication;
a launching station actuator in the launching station for launching the scraper into the pipe;
a holding actuator in the launching station for maintaining the scraper in the launching station; and
a catching station actuator in the catching station for launching the scraper into the pipe,
wherein the system is capable of being maintained under aseptic conditions.

2. The aseptic scraping system of claim 1, wherein the launching station actuator, the actuator, and the catching station actuator comprise a rod which is maintained under sterile conditions.

3. The aseptic scraping system of claim 2, wherein the launching station actuator, the actuator, and the catching station actuator and/or further comprises a steam chamber and wherein the rod extends from the steam chamber into the pipe.

4. The aseptic scraping system of any preceding claims, wherein the holding actuator in the launching station for maintaining the scraper in the launching station is approximately perpendicular to the launching station actuator and optionally wherein the launching station further comprises a fluid intake between the launching station actuator and the holding actuator.

5. The aseptic scraping system of any one of claims 1 to 4, further comprising a scraper.

6. The aseptic scraping system of claim 5, wherein the scraper comprises a means of position detection, optionally wherein the means for position detection is a magnet.

7. The aseptic scraping system of any one of claims 1 to 6, wherein the system further comprises a valve linked to the pipe positioned towards the end of the pipe comprising the catching station.

8. A method of aseptically scraping a pipe maintained under aseptic conditions comprising:
launching a scraper from a launching station attached at one end of the pipe maintained under aseptic conditions by engaging a sterilized launching station actuator to move the scraper into the pipe;
maintaining a positive pressure ahead of the scraper's direction of motion to thereby scrape the pipe; and
allowing the scraper to move to a catching station attached to another end of the pipe in fluid communication with the launching station.

9. The method of claim 8, wherein the step of launching the scraper further comprises sterilizing the launching station actuator before engaging a launching station actuator.

10. The method of claim 9, wherein the sterilizing comprises providing steam to a steam chamber attached to the actuator.

11. The method of any one of claims 8-10, wherein the method comprises flowing a fluid or gas through a fluid intake in the launching station optionally wherein the fluid intake is located adjacent to the launching actuator and upstream of the scraper.

12. The method of any one of claims 8-11, wherein the pipe is pressurized upstream and downstream of the scraper.

13. The method of any one of claims 8-12, wherein the step of launching the scraper further comprises disengaging an actuator holding the scraper in the launching station before engaging the launching station actuators.

14. The method of any one of claims 8-13, wherein the step of maintaining a positive pressure ahead of the scraper's direction of motion to thereby scrape the pipe comprises opening a valve attached to the pipe to atmosphere and wherein the valve is positioned towards an end of pipe to which the catching station is attached.

15. The method of any one of claims 8-14, further comprising returning the scraper to the launching station by engaging a catching station actuator in the catching station and/or detecting a position of the scraper inside the pipe.
